# EUROPEAN PATENT SPECIFICATION

(11) **EP 0 940 738 B1**
(45) Date of publication and mention of the grant of the patent: **11.12.2002**
(21) Application number: 99108765.1
(22) Date of filing: 20.10.1995
(51) Int. Cl.: G05B 19/418

(54) **Field devices for use in a distributed control system**
Feldgeräte zur Verwendung in einem verteilten Steuerungssystem
Equipements du domaine d'exploitation à l'intérieur à l'utilisation dans un système de commande distribué

(30) Priority: 24.10.1994 US 328324; 07.06.1995 US 483119
(43) Date of publication of application: 08.09.1999
(62) Divisional of application: 95937438.0
(73) Proprietor: Fisher-Rosemount Systems, Inc., Austin, Texas 78754 (US)
(72) Inventor: Tapperson, Gary, Austin, TX 78727-2609 (US); Boyd, Thomas Andrew, Austin, TX 78756-2524 (US)
(74) Representative: Bohnenberger, Johannes, Dr.

(56) References cited:
- EP-A- 0 491 657
- GB-A- 2 283 836
- US-A- 4 949 299
- DATABASE INSPEC [Online] INSTITUTE OF ELECTRICAL ENGINEERS, STEVENAGE, GB ROBERTS D.A.: ""Olchfa" a distributed time-critical fieldbus" Database accession no. 4566466 XP002108948

## Description

### BACKGROUND OF THE INVENTION

This invention relates to field devices for use in a distributed control system. Specifically, this invention relates to field devices which can be accessed remotely using wireless transceivers including those field devices that may not be accessible by a controller of the distributed control system.

US Patent 4,949,299 discloses an industrial control communication network consisting of a programmable controller coupled to several sensors by an interface circuit. The controller gathers data from sensors, which are coupled to the controller via an interface circuit and cable. The network also includes an RF tag antenna which interrogates transponder tags on workpieces and then by coupling its RF sensing section to the network cable provides data signals to the network which are transmitted to the controller. The controller then examines the data and outputs signals to field devices via an interface circuit coupled to the network cable.

European Patent EP-A-0491657 discloses an automatic fabrication plant equipped with several fabrication stations, a storage station, interconnected transportation means and manipulation means. A central computer system controls the flow of information in two data networks, one for exchanging data with the fabrication stations and the transport stations. The second network interconnects the storage, transport and manipulation means to control transport of material to and from the fabrication stations. The two data networks have interfaces by which data can be exchanges therebetween under various protocols.

In a typical industrial plant, a distributed control system (DCS) is used to control many of the industrial processes performed at the plant. Typically, the plant has a centralized control room having a computer system with user I/O, disc I/O, and other peripherals as are known in the computing art. Coupled to the computing system is a controller and a process I/O subsystem.

The process I/O subsystem includes a plurality of I/O ports which are connected to various field devices throughout the plant. Field devices known in the control art include various types of analytical equipment, silicon pressure sensors, capacitive pressure sensors, resistive temperature detectors, thermocouples, strain gauges, limit switches, on/off switches, flow transmitters, pressure transmitters, capacitance level switches, weigh scales, transducers, valve positioners, valve controllers, actuators, solenoids, and indicator lights. As used herein, the term "field device" encompasses these devices, as well as any other device that performs a function in a distributed control system and is known in the control art.

Traditionally, analog field devices have been connected to the control room by two-wire twisted pair current loops, with each device connected to the control room by a single two-wire twisted pair. Analog field devices are capable of responding to or transmitting an electrical signal within a specified range. In a typical configuration, it is common to have a voltage differential of approximately 20-25 volts between the two wires of the pair and a current of 4-20 milliamps running through the loop. An analog field device that transmits a signal to the control room modulates the current running through the current loop, with the current proportional to the sensed process variable. On the other hand, an analog field device that performs an action under control of the control room is controlled by the magnitude of the current through the loop, which is modulated by the I/O port of the process I/O system, which in turn is controlled by the controller. Traditional two-wire analog devices having active electronics can also receive up to 40 milliwatts of power from the loop. Analog field devices requiring more power are typically connected to the control room using four wires, with two of the wires delivering power to the device. Such devices are known in the art as four-wire devices and are not power limited, as are two-wire devices.

In contrast, traditional discrete field devices transmit or respond to a binary signal. Typically, discrete field devices operate with a 24 volt signal (either AC or DC), a 110 or 240 volt AC signal, or a 5 volt DC signal. Of course, a discrete device may be designed to operate in accordance with any electrical specification required by a particular control environment. A discrete input field device is simply a switch which either makes or breaks the connection to the control room, while a discrete output field device will take an action based on the presence or absence of a signal from the control room.

Historically, most traditional field devices have had either a single input or a single output that was directly related to the primary function performed by the field device. For example, the only function implemented by a traditional analog resistive temperature sensor is to transmit a temperature by modulating the current flowing through the two-wire twisted pair, while the only function implemented by a traditional analog valve positioner is to position a valve between an open and closed position, inclusive, based on the magnitude of the current flowing through the two-wire twisted pair.

More recently, hybrid systems that superimpose digital data on the current loop have been used in distributed control systems. One hybrid system is known in the control art as the Highway Addressable Remote Transducer (HART) and is similar to the Bell 202 modem specification. The HART system uses the magnitude of the current in the current loop to sense a process variable (as in the traditional system), but also superimposes a digital carrier signal upon the current loop signal. The carrier signal is relatively slow, and can provide updates of a secondary process variable at a rate of approximately 2-3 updates per second. Generally, the digital carrier signal is used to send secondary and diagnostic information and is not used to realize the primary control function of the field device. Examples of information provided over the carrier signal include secondary process variables, diagnostic information (including sensor diagnostics, device diagnostics, wiring diagnostics, and process diagnostics), operating temperatures, temperature of the sensor, calibration information, device ID numbers, materials of construction, configuration or programming information, etc. Accordingly, a single hybrid field device may have a variety of input and output variables and may implement a variety of functions.

HART is an industry standard nonproprietary system. However, it is relatively slow. Other companies in the industry have developed proprietary digital transmission schemes which are faster, but these schemes are generally not used by or available to competitors.

More recently, a newer control protocol has been defined by the Instrument Society of America (ISA). The new protocol is generally referred to as Fieldbus, and is specifically referred to as SP50, which is an acronym for Standards and Practice Subcommittee 50. The Fieldbus protocol defines two subprotocols. An H1 Fieldbus network transmits data at a rate up to 31.25 kilobits per second and provides power to field devices coupled to the network. An H2 Fieldbus network transmits data at a rate up to 2.5 megabits per second, does not provide power to field devices connected to the network, and is provided with redundant transmission media. Fieldbus is a nonproprietary open standard and is attracting attention in the industry.

As additional protocols and architecture gain popularity in the industry, the industry will face greater and greater challenges melding these technologies together into a single distributed control system. For example, newer devices will be coupled to an existing distributed control system. In these situations, the signals coming from the control room may expect traditional analog or hybrid technologies, but the field devices may be coupled to an H1 or H2 Fieldbus network. Conversely, the control room of the industrial plant may be renovated, with the inputs and outputs to the control room comprising a modern H1 or H2 field bus, and the individual signals running to some older analog and hybrid field devices, and newer Fieldbus based field devices.

In addition to the challenge of integrating various technologies into a single distributed control system, newer field devices will have maintenance modes and enhanced functions that are not accessible via an older control system. In addition, even when all components of a distributed control system adhere to the same standard (such as the Fieldbus standard), one manufacturer's control room equipment may not be able to access the secondary functions or secondary information provided by another manufacturer's field devices.

### SUMMARY OF THE INVENTION

The present invention provides field devices for use in a distributed control system having a control room for providing primary access to the field devices system, the field devices also being accessible using a non-redundant secondary access enabling secondary access of all information and functions.

The present invention also provides field devices allowing redundant access in the event of a failure of the hard-wired media.

According to the present invention there is provided a network-based field device for a distributed control system comprising a primary control network port through which a primary control access can be made to the network-based field device for implementing a control function; a non-redundant secondary port through which a non-redundant secondary access can be made to the network-based field device; and characterized in that a wireless transceiver is coupled to the non-redundant secondary port.

Preferably, the wireless transceiver receives power from a connection to the primary control network port.

In one embodiment of the invention, the field device comprises a bridge for transmitting information from a distribution network to a control network in a distributed control system, and is characterized in that it comprises a third port that connects to the distribution network.

Preferably, the bridge facilitates. access to a subset of functions implemented by other field devices connected to the control network, which subset of functions cannot be accessed by a controller coupled to the distribution network.

### BRIEF DESCRIPTION OF THE DRAWINGS

Figure 1 is a diagram of a prior art distributed control system.
Figure 2A is a diagram of an industrial plant having two distributed control systems and shows three arrangements embodying the present invention.
Figure 2B is a diagram of industrial plant having two distributed control systems and shows three arrangements embodying the present invention.
Figure 3 is a diagram of an industrial plant having an older analog distributed control system that has been retrofitted with newer network-based field devices in accordance with the invention.

### DETAILED DESCRIPTION OF THE PREFERRED EMBODIMENTS

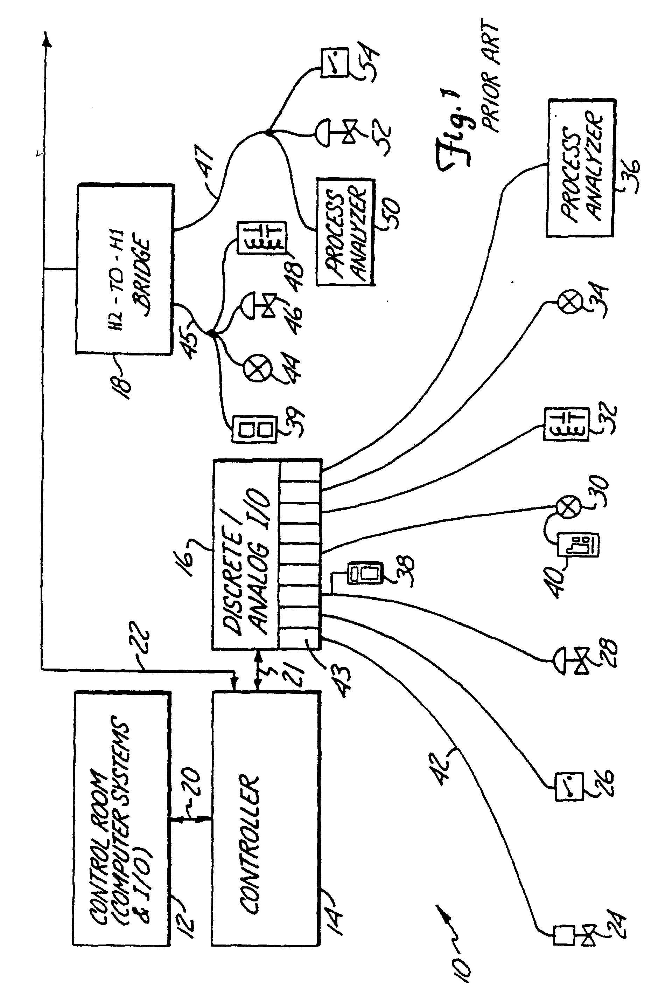

Figure 1 is a block diagram of a prior art distributed control system (DCS) 10. DCS 10 is comprised of control room 12, controller 14, discrete/analog I/O unit 16, H2-to-H1 bridge 18, and a variety of field devices represented by solenoid 24, switches 26 and 54, valve positioners 28, 46, and 52, transmitters 30, 34, and 44, process analyzers 36 and 50. These devices represent any type of field device known in the control art. Also shown in Figure 1 are handheld units 38 and 39, which are capable of accessing information in a hybrid or Fieldbus-based field device via a physical wire connection, and a local operator/user station 40, which is capable of issuing and receiving control room-type commands to and from the field device to which it is connected via a physical wire connection.

Control room 12 includes computers, user I/O, various forms of data storage devices, and other computing devices known in the art. Control room 12 is coupled to controller 14 via bus 20, which is typically a proprietary digital communications network or an open digital communication network employing a proprietary protocol. Controller 14 receives various commands from control room 12 and provides data to control room 12.

As depicted in Figure 1, DCS 10 is a hybrid system comprising two different types of field devices. Devices 24 - 36 are traditional analog, discrete, and hybrid analog/digital devices, wherein the primary control function of the device is realized by modulating a current. These field devices are coupled to discretelanalog I/O unit 16, with each device connected to an individual channel of unit 16 by a single pair of wires (and possibly two additional power wires in the case of a traditional four-wire field device). For example, solenoid 24 is coupled via two-wire twisted pair 42 to channel 43 of unit 16.

For a traditional analog or discrete field device, the only communication with the device occurs by modulating or switching the current running through the two-wire twisted pair, with the magnitude of the current representing a measured process variable (as in the case of the transmitter), or an action requested by controller 14 (as in the case of a valve positioner or solenoid). Traditional analog devices have a frequency response limited to approximately 10 Hz and receive power from the two-wire twisted pair.

Hybrid analog/digital devices operate in a manner similar to traditional analog devices, but also allow digital communication of secondary information by superimposing a digital carrier signal on the modulated current carried by the two-wire twisted pair. One such hybrid analog/digital system is known in the control art as Highway Addressable Remote Transducer (HART) and transmits data in a manner similar to a conventional computer modem adhering to the Bell 202 specification. Generally, the primary function of these devices is still realized by modulating the current through the loop, while other types of secondary information, such as diagnostic data, operating temperature, identification codes, error codes, and secondary variables, are transmitted digitally. In such a system, digital communication is relatively slow and is limited to approximately 300 baud. When a maintenance person desires to test an analog device, the maintenance person must make a physical connection to the device itself, such as local operator/user station 40 connected to transmitter 30, or to the two-wire twisted pair leading to the device, such as handheld unit 38 connected to the two-wire twisted pair leading to valve positioner 28.

In contrast, devices 44 - 54 are modern network-based digital field devices, wherein all information is digitally transmitted to and from each device. While many control system manufacturers have developed proprietary digital systems, the Standards and Practices Subcommittee 50 of the Instrument Society of America has developed and specified an architecture known in the art as Fieldbus. The Fieldbus specification includes two types of networks, a lower speed network referred to as H1 and a higher speed network referred to as H2. Both networks can support multiple connections to a single network bus, in contrast to traditional analog connections, which only support one device per two-wire twisted pair. While the present invention is described herein with reference to a Fieldbus network-based control system, in other embodiments the present invention may be employed in any distributed control system having network-based field devices.

A Fieldbus H2 network can transmit data at a rate up to 2.5 megabits per second. In addition, an H2 network is redundant, with two sets of physical wire media comprising the network. Should the primary wire media fail, the secondary wire media is automatically used by the DCS. Because of the high capacity and redundancy of H2 Fieldbus networks, H2 Fieldbus networks are beginning to be used as a distribution network that connect the controller to various distribution units in the DCS. However, traditional distribution networks are proprietary networks using either parallel or serial communication.

In Figure 1, H2 distribution network 22 couples controller 14 to H2-to-H1 bridge 18, and proprietary bus 21 couples controller 14 to discrete/analog I/O unit 16. In other configurations known in the art, unit 16 and bridge 18 may be coupled to a common distribution network. As previously discussed, discrete/analog I/O unit 16 includes discrete channels, with each channel coupled to a single device.

H2-to-H1 bridge links the data carried by proprietary distribution network 22 to H1 Fieldbus control networks 45 and 47. H1 Fieldbus control network 45 is coupled to transmitters 44, valve positioner 46, and relay 48, and H1 Fieldbus 47 is coupled to process analyzer 50, valve positioner 52, and solenoid 54. While an H1 Fieldbus network is not redundant, and has a lower data transmission rate of approximately 31.25 kilobits per second, it is capable of providing power to the devices to which it is coupled, while an H2 Fieldbus network does not. For the above reasons, the H1 Fieldbus network is ideal for providing final connections to individual field devices, while the H2 Fieldbus network is ideal for distributing control signals throughout the physical plant in which the DCS is installed.

More recently, field devices have been provided with microprocessors and additional functionality. Such "smart" field devices are capable of monitoring a plurality of process variables, performing a variety of control functions, performing comprehensive diagnostics, and providing a wide array of various types of status information. The Fieldbus specification specifies a variety of functions that may be supported by various Fieldbus field devices. In addition, many manufacturers have provided secondary functions beyond those specified in the Fieldbus specification. While Fieldbus field devices manufactured by different manufacturers are compatible to the extent that only Fieldbus specified functions are accessed, they are not compatible with respect to the secondary functions. For example, a Fieldbus controller manufactured by company A will generally not be able to access the secondary functions provided by a Fieldbus valve positioner manufactured by company B. Therefore, an industrial plant using a variety of Fieldbus components provided by different manufacturers will not be able to derive the benefit of all the functions provided by the various components.

The problem is worse in older distributed control systems that were designed to use traditional analog/discrete and hybrid devices. Often a company will wish to preserve an investment in an existing installation, and will retrofit the installation with newer Fieldbus field devices. In such an installation, the control room will not even be able to access the standardized Fieldbus functions provided by the various devices. Accordingly, a need exists to access the secondary functions provided by various manufacturers, as well as standardized Fieldbus functions when a Fieldbus based device is connected to an older distributed control system.

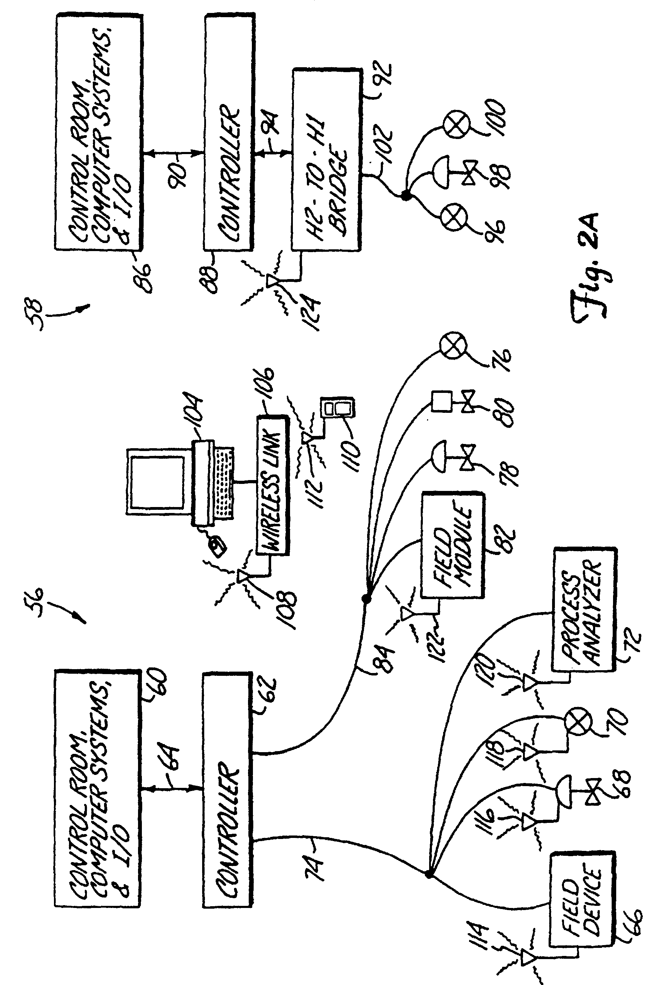

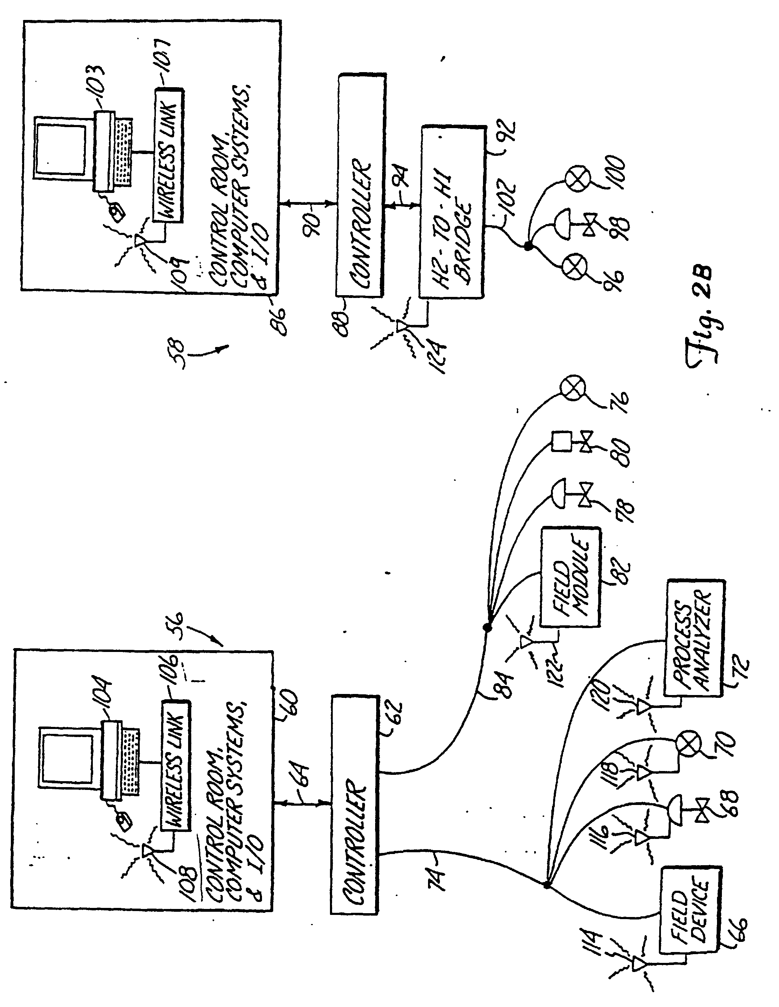

Figure 2 is a diagram of an industrial plant having two distributed control systems. DCS 56 is comprised of control room 60, controller 62, bus 64, field device 66, valve positioner 68, transmitter 70, process analyzer 72, H1 Fieldbus control network 74, transmitter 76, valve positioner 78, solenoid 80, field module 82, and H1 Fieldbus control network 84. DCS 58 is comprised of control room 86, controller 88, bus 90, H2 Fieldbus distribution network 94, H2-to-H1 bridge 92, transmitters 96 and 100, valve positioner 98, and H1 Fieldbus control network 102. Buses 64 and 90 are normally proprietary digital communication networks, or open communication networks employing a proprietary protocol. Also shown in Figure 2 is terminal 104 and handheld control unit 110. Terminal 104 is coupled to wireless link module 106, which in turn is connected to wireless transceiver 108. Handheld control unit 110 includes wireless transceiver 112.

Two embodiments of the present invention are illustrated in DCS 56. The first embodiment is illustrated by those field devices coupled to H1 Fieldbus control network 74. Each field device on control network 74 includes a wireless transceiver. Field device 66 represents any generic field device coupled to control network 74 and includes wireless transceiver 114. Valve positioner 68 includes wireless transceiver 116, transmitter 70 includes wireless transceiver 118, and process analyzer 72 includes wireless transceiver 120. Each wireless transceiver implements a wireless Fieldbus connection with terminal 104 and handheld unit 110, thereby allowing access to secondary functions of each field device not accessible by control room 60, as well as providing a maintenance person with convenient access to each field device without having to communicate with the control room and independent of the distributed control system.

The wireless Fieldbus connections described herein are implemented by secondary wireless network ports that are used in addition to primary network ports that are hardwired to a control room. Accordingly, a network-based field device may alternately be accessed via either the hardwired connection to the control room or the wireless Fieldbus connection. In contrast, many prior art network-based field devices are provided with a redundant hardwired network connection that is used as a backup if the first connection fails. However, the field device is generally not alternately accessed by either the first or redundant connections, except for testing the redundant connection. In addition, typically the redundant connection is also routed to the control room.

Another novel feature of the present invention is that the wireless Fieldbus port attached to each field device is powered by the hardwired H1 Fieldbus port attached to each device. Therefore, a customer having Fieldbus control equipment from one manufacturer can connect field devices having a wireless Fieldbus port (in accordance with the present invention) to an existing H1 Fieldbus control network, and can access all the functions of the added field devices using a handheld unit having a wireless Fieldbus link, or a terminal having a wireless Fieldbus link. Since the wireless Fieldbus link of the field devices is powered by the existing H1 Fieldbus control network, no additional wiring is required.

The wireless links disclosed herein represent any wireless communication method known in the art, including, but not limited to, radio, infrared, visible light, and ultrasonic form of wireless communication.

A second arrangement embodying the present invention is illustrated by the devices connected to H1 Fieldbus control network 84. Transmitter 76, valve positioner 78, and solenoid 80 are each coupled to control network 84. Also coupled to control network 84 is field module 82, which includes a wireless transceiver 122 powered by H1 Fieldbus control network 84. Field module 82, in essence, forms a wireless bridge between control network 84 and handheld unit 110 or terminal 104, and allows unit 110 or terminal 104 to access each device coupled to H1 Fieldbus control network 84. Accordingly, field module 82 is ideally suited for use in an existing environment having a variety of H1 Fieldbus devices from different manufacturers. Handheld unit 110 and terminal 104 can easily be programmed to access the functions of each device on the control network to which field module 82 is connected.

A third arrangement embodying the present invention is illustrated by DCS 58. In DCS 58, controller 88 is coupled to H2-to-H1 bridge by H2 Fieldbus distribution network 94. H2-to-H1 bridge links H2 Fieldbus distribution network 94 to H1 Fieldbus control network 102. H2-to-H1 bridge also includes a second Fieldbus port connected to wireless transceiver 124, and communicates with a remote device such as handheld unit 110 or terminal 104. Accordingly, the remote wireless field device can access all field devices serviced by the H2-to-H1 bridge, such as transmitters 96 and 100 and valve positioner 98. In other configurations, it is common for an H2-to bridge to service a plurality of H1 Fieldbus control networks, in which case all field devices connected to all control networks serviced by the H2-to-H1 bridge can be accessed remotely.

Many industrial plants have a plurality of distributed control systems. By using wireless Fieldbus networks, a maintenance person can walk from DCS to DCS with a single handheld control unit and access field devices coupled to each DCS. Since the handheld control unit can be programmed to access each field device, the maintenance person can access all the functions of devices supplied by different manufacturers.

The present invention also provides redundant wireless access to field devices in a distributed control system, thereby allowing access to field devices in the event of a failure of the hard-wired media that connects the field devices to a control room. The redundant wireless access can be used several ways. First, it can be used to allow continued operation of a distributed control system in the event of failure of or maintenance on the hard-wired media. However, even if continued operation is not desired, redundant wireless access may still be valuable for monitoring process variables and performing control actions, such as those required to shut down a process. For example, consider a distributed control system that is subjected to some sort of mishap, such as an explosion. The explosion, may vary well render the hard-wired media connecting field devices to the control room inoperable. Using the redundant wireless access provided by the present invention, a control room operator will still be able to access field device to perform an orderly shutdown of the distributed control system. The operator may observe critical temperatures and pressures, and adjust or close valves and other devices to complete the shut down. By having redundant wireless access to the field devices, the operator may be able to effect a shutdown in such a way as to minimize losses.

Figure 2B is a diagram of an industrial plant having two distributed control systems similar to Figure 2A and wherein the same components have the same reference numerals. DCS 56 in Figure 2B is comprised of control room 60 (which now includes terminal 104 coupled to wireless link module 106, which in turn is connected to wireless transceiver 108), controller 62, bus 64, field device 66, etc., as described for Figure 2A. DCS 58 is comprised of control room 86 (which now includes terminal 103 coupled to wireless link module 107, which in turn is connected to wireless transceiver 109), controller 88, bus 90, etc., as described for Figure 2A.

Two arrangements of the invention of Figure 2B are illustrated in DCS 56. The first arrangement is illustrated by those field devices coupled to H1 Fieldbus control network 74. Each field device on control network 74 includes a wireless transceiver. Each wireless transceiver implements a redundant wireless Fieldbus connection with terminal 104, thereby allowing redundant wireless access to each field device from control room 60.

A second arrangement of the invention of Figure 2B is illustrated by the devices connected to H1 Fieldbus control network 84. Transmitter 76, valve positioner 78, and solenoid 80 are each coupled to control network 84. Also coupled to control network 84 is field module 82, which includes a wireless transceiver 122 powered by H1 Fieldbus control network 84. Field module 82, in essence, forms a wireless bridge between control network 84 and terminal 104 in control room 56, and allows terminal 104 to access each device coupled to H1 Fieldbus control network 84. Accordingly, field module 82 is ideally suited for providing redundant wireless access in an existing environment having a variety of H1 Fieldbus devices from different manufacturers.

A third arrangement of the invention of Figure 2B is illustrated by DCS 58. In DCS 58, controller 88 is coupled to H2-to-H1 bridge by H2 Fieldbus distribution network 94. H2-to-H1 bridge links H2 Fieldbus distribution network 94 to H1 Fieldbus control network 102. H2-to-H1 bridge also includes a second Fieldbus port connected to wireless transceiver 124, and communicates with a remote device such as terminal 103. Accordingly, terminal 103 in control room 86 can access all field devices serviced by the H2-to-H1 bridge, such as transmitters 96 and 100 and valve positioner 98.

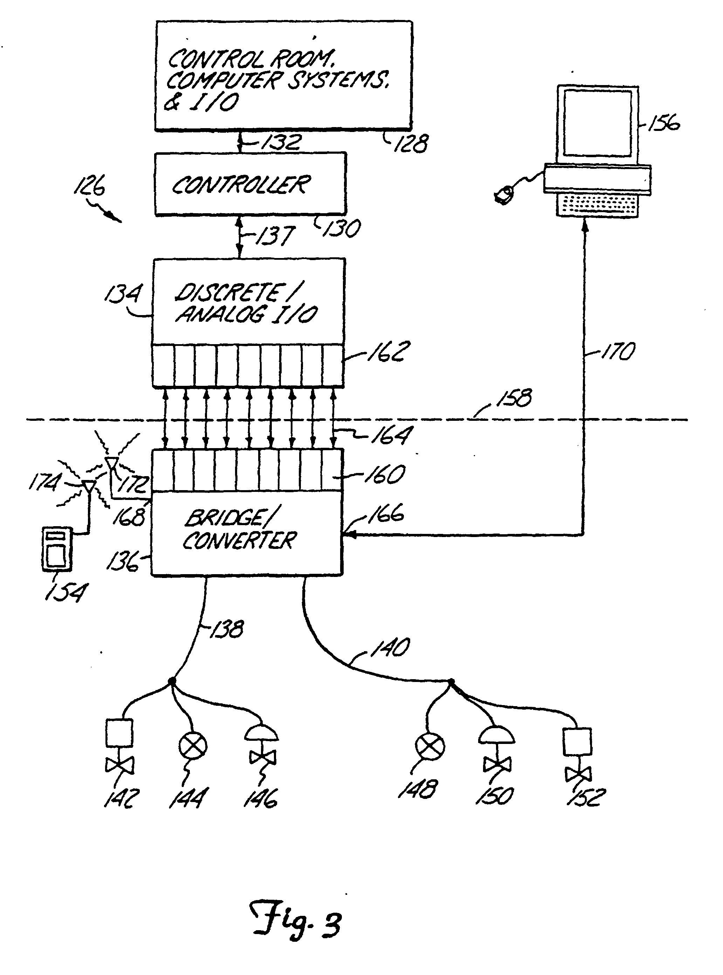

Figure 3 shows an embodiment of the present invention adapted for use in older distributed control systems that have been retrofitted with newer Fieldbus field devices. DCS 126 includes control room 128, controller 130, bus 132, discrete/analog I/O unit 134, bridge/converter 136, bus 137, H1 Fieldbus control networks 138 and 140, solenoids 142 and 152, transmitters 144 and 148, valve positioner 146 and 150, handheld unit 154, and terminal 156.

DCS 126 represents an older distributed control system designed for use with traditional discrete analog/discrete and hybrid field devices. With the exception of terminal 156, everything above dotted line 158 represents components that are part of an older existing installation. Everything below dotted line 158 (and terminal 156) represent newer Fieldbus components that have been added to the installation.

Bridge/converter 136 interfaces the older portion of DCS 126 (above dotted line 158) to the Fieldbus devices. Bridge/converter 136 includes a plurality of process I/O channels (such as channel 160) that are coupled to corresponding process I/O channels of discrete/analog I/O unit 134 (such as channel 162) by two-wire twisted pairs (such as two-wire twisted pair 164). Bridge/converter 136 converts the analog, discrete, and/or hybrid information provided by discrete/analog I/O unit 134 into digital information that is transmitted to devices on H1 Fieldbus networks 138 and 140, and converts the digital information received from devices on networks 138 and 140 into analog, discrete, and/or hybrid information required by discrete/analog I/O unit 134.

From the viewpoint of control room 128, the Fieldbus field devices appear as traditional analog/discrete and hybrid field devices. Accordingly, control room 128 cannot access any of the secondary functions provided by the Fieldbus field devices. To access these functions, bridge/converter 136 is provided with an active hard-wired Fieldbus port 166 and wireless Fieldbus port 168.

Hard-wired Fieldbus port 166 is connected to Fieldbus network 170, which in turn is connected to terminal 156. In one embodiment, terminal 156 is located within control room 128, and provides operators within the control room with access to all the functions that are provided by the Fieldbus field devices, and are not accessible through existing control room components. Port 166 is not a redundant port, rather it is a secondary port that provides the control room with access to all the functions provided by the Fieldbus based devices. Accordingly, a control room operator may alternately access a Fieldbus based device via discrete/analog I/O unit 134, or terminal 156. In contrast, a redundant port is used as a backup if the first port fails. In the configuration shown in Figure 3, a redundant port would not be coupled to the control room.

Fieldbus port 168 is connected to wireless transceiver 172, thereby forming a wireless Fieldbus network similar to the wireless Fieldbus networks shown in Figure 2. Handheld unit 154 has wireless transceiver 174, and communicates with Fieldbus devices 142 - 152 via wireless transceiver 172, which is connected to wireless port 168 of bridge/converter 136. In addition to handheld unit 154, a terminal having a wireless link (such as terminal 104 and wireless link 106 in Figure 2) may be used to communicate with the field devices coupled to bridge/converter 136.

The present invention provides for secondary access to field devices in a distributed control system having a control room for providing primary access to the field devices. In a modern distributed control system having Fieldbus devices coupled to a Fieldbus control room, the present invention provides a wireless link to a remote unit, such as a handheld device or a terminal having a wireless link, thereby allowing a maintenance person to access each Fieldbus device in the field via the remote unit. Since a Fieldbus control room from one manufacturer may not be able to access secondary functions of a Fieldbus device from another manufacturer, the handheld unit can also provide a convenient way to access secondary functions provided by various manufacturers from a single, easily programmed handheld unit or remote terminal.

The present invention also provides for wireless redundant access to field devices in a distributed control system having a control room that provides hard-wired access to the field devices. In a modern distributed control system having Fieldbus devices coupled to a Fieldbus control room, the present invention provides a redundant wireless access to a terminal having a wireless link. The apparatus of the present invention allows access to field devices in the event of failure or other unavailability of the hard-wired media that couples the control room to field devices, which is the primary way of accessing the control devices.

In one embodiment, each Fieldbus-based device is provided with its own secondary wireless H1 or H2 Fieldbus port that is powered by the H1 Fieldbus control network. This embodiment provides maximum flexibility because no modification of the distributed control system is required, and is ideally suited for new devices that are to be added to an existing Fieldbus installation. As soon as the H1 Fieldbus device is connected to the existing H1 Fieldbus control network, the device can be accessed via the wireless handheld unit or the wireless terminal.

In another arrangement, a field module is connected to an existing Fieldbus control network. The field module has a wireless H1 or H2 Fieldbus port that is powered by the H1 Fieldbus control network, and provides access from the wireless handheld unit or the wireless terminal to all Fieldbus devices connected to the control network. This embodiment is ideally suited for distributed control systems that already have Fieldbus devices.

In yet another arrangement, the distributed control system is provided with an H2-to-H1 bridge having one or more H1 control networks coupled to Fieldbus devices, a hard-wired H2 port coupled to a controller, and a wireless H2 or H1 Fieldbus port. The wireless Fieldbus port allows a wireless handheld unit or a wireless terminal to access all Fieldbus devices on all H1 control networks serviced by the H2-to-H1 bridge.

In a fourth arrangement, a bridge/converter is connected to the two-wire twisted pair analog/discrete and hybrid wires coming from an older control room, and couples the older control room to newer Fieldbus devices. In this arrangement, the bridge/converter provides an H1 or H2 Fieldbus port to allow access to functions of the Fieldbus devices not accessible from the control room. In one configuration, a terminal is connected to the bridge/converter via a hard-wire Fieldbus network. The terminal, which may be placed in the control room, provides the operators of the control system with access to all functions of the Fieldbus-based devices. In another configuration (which may compliment the first configuration), the bridge/converter is provided with a wireless H1 or H2 Fieldbus port that allows the Fieldbus field devices to be accessed by a wireless terminal or a wireless handheld unit.

## Claims

1. A network-based field device (66-72) for a distributed control system comprising
a primary control network port through which a primary control access can be made to the network-based field device (66-72) for implementing a control function;
a non-redundant secondary port through which a non-redundant secondary access can be made to the network-based field device (66-72);
and **characterized in that** a wireless transceiver (114-120) is coupled to the non-redundant secondary port.

2. A field device (66-72) as claimed in Claim 1,
**characterized in that** the wireless transceiver (114-120) receives power from a connection to the primary network control port.

3. A field device (66-72) as claimed in Claim 1 which can implement a set of functions and **characterized in that** a subset of the set of functions accessible via the non-redundant secondary port and not accessible via the primary control network port.

4. A field device (66-72) as claimed in Claim 1, comprising a bridge for transmitting information from a distribution network to a control network in a distributed control system, and **characterized in that** it comprises a third port that connects to the distribution network.

5. A field device (66-72) as claimed in Claim 4,
**characterized in that** it facilitates access to a subset of functions implemented by other field devices connected to the control network, and **in that** the subset of functions cannot be accessed by a controller coupled to the distribution network.

6. A field device (66-72) as claimed in Claim 4,
**characterized in that** it comprises a plurality of discrete/analog I/O channels (160) for connection to a discrete/analog I/O unit.

## Patentansprüche

1. Netzwerkbasierte Feldeinrichtung (66-72) für ein verteiltes Steuerungssystem, umfassend:
einen primären Netzwerksteueranschluss, über den ein erster Steuerungszugriff auf die netzwerkbasierte Feldeinrichtung (66-72) zum Implementieren einer Steuerungsfunktion vorgenommen werden kann;
einen nicht-redundanten sekundären Anschluss, über den ein redundanzfreier zweiter Zugriff auf die netzwerkbasierende Feldeinrichtung (66-72) vorgenommen werden kann;
**dadurch gekennzeichnet, dass**
ein drahtloser Transceiver (114-120) mit dem nicht-redundanten sekundären Anschluss gekoppelt ist.

2. Feldeinrichtung (66-72) gemäß Anspruch 1,
**dadurch gekennzeichnet, dass**
der drahtlose Transceiver (114-120) über eine Verbindung zu dem primären Netzwerksteueranschluss mit Strom versorgt wird.

3. Feldeinrichtung (66-72) gemäß Anspruch 1, bei welcher ein Satz von Funktionen implementiert werden kann,
**dadurch gekennzeichnet, dass**
eine Teilmenge des Satzes von Funktionen über den nicht-redundanten sekundären Anschluss und nicht über den primären Netzwerksteueranschluss zugänglich ist.

4. Feldeinrichtung (66-72) gemäß Anspruch 1, umfassend eine Brücke zum Übertragen von Information von einem Verteilungsnetzwerk an ein Steuerungsnetzwerk in einem verteilten Steuerungssystem,
**dadurch gekennzeichnet, dass**
diese einen dritten Anschluss umfasst, an den das Verteilungsnetzwerk angeschlossen ist.

5. Feldeinrichtung (66-72) gemäß Anspruch 4,
**dadurch gekennzeichnet, dass**
diese einen Zugriff auf eine Teilmenge von Funktionen ermöglicht, welche über andere an das Steuerungsnetzwerk angeschlossene Feldeinrichtungen implementiert sind, und dass die Teilmenge von Funktionen nicht über eine mit dem Verteilungsnetzwerk gekoppelte Steuerungseinrichtung zugänglich ist.

6. Feldeinrichtung (66-72) gemäß Anspruch 4,
**dadurch gekennzeichnet, dass**
diese eine Vielzahl von digitalen/analogen Eingabe-/Ausgabekanälen (160) zur Verbindung mit einer digitalen/analogen Eingabe-/Ausgabeeinheit umfasst.

## Revendications

1. Dispositif sur site basé sur un réseau (66 à 72) pour un système de commande réparti comprenant
un port primaire de réseau de commande par lequel on peut effectuer un accès primaire de commande au dispositif sur site basé sur un réseau (66 à 72) pour implémenter une fonction de commande ;
un port secondaire non redondant par lequel on peut effectuer un accès secondaire non redondant au dispositif sur site basé sur un réseau (66 à 72) ;
et **caractérisé en ce qu'**un émetteur/récepteur sans fil (114 à 120) est couplé au port secondaire non redondant.

2. Dispositif sur site (66 à 72) selon la revendication 1, **caractérisé en ce que** l'émetteur/récepteur sans fil (114 à 120) reçoit de la puissance par une connexion au port primaire de réseau de commande.

3. Dispositif fonctionnel sur site (66 à 72) selon la revendication 1 apte à implémenter un ensemble de fonctions et **caractérisé en ce qu'**un sous-ensemble de l'ensemble des fonctions est accessible via le port secondaire non redondant et non accessible via le port primaire de réseau de commande.

4. Dispositif sur site (66 à 72) selon la revendication 1, comprenant un port pour transmettre des informations d'un réseau de distribution à un réseau de commande dans un système de commande reparti, et **caractérisé en ce qu'**il comprend un troisième port se connectant au réseau de distribution.

5. Dispositif sur site (66 à 72) selon la revendication 4, **caractérisé en ce qu'**il facilite l'accès à un sous-ensemble de fonctions implémentées par d'autres dispositifs sur site connectés au réseau de commande et **en ce qu'**un contrôleur couplé au réseau de distribution ne peut pas accéder au sous-ensemble de fonctions.

6. Dispositif sur site (66 à 72) selon la revendication 4, **caractérisé en ce qu'**il comprend une pluralité de canaux d'entrée/sortie discrets/analogiques (160) pour une connexion à une unité d'entrée/sortie discrète/analogique.
